# EUROPEAN PATENT APPLICATION

(11) **EP 4 148 269 A1**
(43) Date of publication of application: **15.03.2023**
(21) Application number: 21196212.1
(22) Date of filing: 13.09.2021
(51) Int. Cl.: F03D 1/06, B29C 70/54, B29D 99/00, G06N 3/08, G06N 20/00, F03D 17/00, B29L 31/08, G01N 21/84

(54) **METHOD FOR MANUFACTURING A WIND TURBINE BLADE, COMPUTER PROGRAM PRODUCT AND MANUFACTURING SYSTEM**

(71) Applicant: Siemens Gamesa Renewable Energy A/S, 7330 Brande (DK)
(72) Inventor: Kavala, Venkateswara Rao, 560066 Bangalore (IN); Biradar, Poornima, 560068 Bangalore (IN); Chaurasiya, Ajay Kumar, 421503 Maharashtra (IN); K, Shruthi, 625006 Madurai (IN); SAHA, NIBIR, 781013 Guwahati (IN); Srinivasan, Radhika, 560005 Bengaluru (IN)
(74) Representative: SGRE-Association

(57) **Abstract**

A method for manufacturing a wind turbine blade (3), comprising the steps:
a) arranging (S1) a shear web (14) on a blade shell portion (16),
b) obtaining (S2) positional data (P) of an actual position of the shear web (14) by means of a sensor system (21),
c) comparing (S3) the positional data (P) of the actual position of the shear web (14) with reference positional data (R) of a nominal position by applying an AI-device (28) trained based on machine learning, and
d) determining (S4), by the AI-device (28), a feedback information (F, 29) based on the comparison.

Thus, the shear web can be placed with a higher positional accuracy and more efficiently. Therefore, misplacement of the shear web can be avoided even for a long blade.

## Description

The present invention relates to a method for manufacturing a wind turbine blade, a computer program product and a manufacturing system.

Producing more power using a wind turbine under given wind conditions can be achieved by increasing the size of the blades. Current blade lengths can reach 100 meter and more. However, the manufacture of wind turbine blades is becoming increasingly difficult for increasing blade sizes.

Wind turbine blade shells are usually manufactured from plies of fiber material which are infused with a resin and cured in a mold. For providing sufficient stability to the blade, a shear web is arranged in the interior cavity of the blade shell. The shear web connects a pressure side and a suction side of the blade shell. By connecting the pressure and suction sides of the shell, the shear web can transfer shear stress and, thus, increase the stability of the blade.

With increasing blade lengths, the positioning of the shear web becomes a challenging and complex task. For example, quality checks and visual inspection of the shear web position are time consuming and expensive for very long blades. Further, the required positional accuracy for the structural stability of the blade is hardly achieved with current methods when placing a shear web for a very long blade. In particular, misalignment of a shear web may lead to high loads and bending moments in the blade. Such high loads and moments may result in a loss of blade structural integrity.

It is one object of the present invention to provide an improved method for manufacturing a wind turbine blade.

Accordingly, a method for manufacturing a wind turbine blade is proposed. The method comprises the steps:
a) arranging a shear web on a blade shell portion,
b) obtaining positional data of an actual position of the shear web by means of a sensor system,
c) comparing the positional data of the actual position of the shear web with reference positional data of a nominal position by applying an AI-device trained based on machine learning, and
d) determining, by the AI-device, a feedback information based on the comparison.

By manufacturing a wind turbine blade applying the proposed method, misplacement of the shear web can be avoided. In particular, using the sensor system to determine an actual position of a shear web of the blade and applying the AI-device to obtain a feedback information on a comparison with a nominal position of the shear web allows placing the shear web with a higher positional accuracy. Further, quality check of the position of the shear web can be performed easier and faster.

Thus, with wind turbine blades produced by the proposed method, shear stress can be better transferred by the shear web between the pressure side and the suction sides of the blade shell. Hence, loads and bending moments on the blade can be reduced. Thus, a wind turbine blade with a higher stability can be manufactured. In particular, also large wind turbine blades having a length of up to 100 meter and more can be manufactured with a high stability.

The wind turbine blade is provided to become part of a rotor of a wind turbine. The wind turbine is an apparatus to convert the wind's kinetic energy into electrical energy. The wind turbine comprises, for example, the rotor having one or more of the blades connected each to a hub, a nacelle including a generator, and a tower holding, at its top end, the nacelle. The tower of the wind turbine may be connected to a foundation of the wind turbine such as a monopile in the seabed.

In the installed state of the wind turbine, the blade, e.g., a root portion of the blade, is, for example fixedly or rotatably connected to the hub. The wind turbine blade is, for example, directly bolted to the hub, or is connected via a pitch bearing to the hub. The pitch bearing is configured to adjust the angle of attack of the blade according to the wind speed to control the rotational speed of the blade.

Apart from the essentially cylindrical root portion configured for connection with the hub, the outer surface of the wind turbine blade has an aerodynamically shaped cross-section (airfoil). The aerodynamically shaped cross-section of the wind turbine blade comprises, for example, a pressure side (upwind side) and a suction side (downwind side). The pressure side and the suction side are connected with each other at a leading edge and a trailing edge.

A blade shell of the blade is, for example, manufactured from fiber-reinforced resin. The blade shell is, for example, manufactured by vacuum-infusion of resin into a dry fiber lay-up and curing the resin. However, the blade shell may also be manufactured by a different method. The blade shell has, in particular, an outer surface and an inner surface, wherein the outer surface defines the aerodynamic profile of the blade, and the inner surface defines an inner cavity of the blade.

A "blade shell portion" in the present application includes a manufacturing state of the blade shell in which a casting of the blade shell is completed. For example, it includes a case in which a fiber lay-up has already been infused with resin and cured.

Further, a "blade shell portion" in the present application may also include a manufacturing state of the blade shell in which casting of the blade shell is not yet completed. In this case, a "blade shell portion" may, for example, comprise a dry or semi-dry fiber lay-up. Further, the shear web may be arranged in this case in step a) on the dry or semi-dry fiber lay-up. Then, the dry or semi-dry fiber lay-up may be casted after step d). For example, after step d) the dry or semi-dry fiber lay-up may be infused with resin and cured.

The blade shell portion on which the shear web is placed is, for example, arranged in a mold. The mold comprises, for example, a lower mold portion and an upper mold portion. The blade shell portion is, for example, arranged in the lower mold portion. The blade shell portion is, for example, provided in the lower mold portion to form a half shell of the blade. The half shell may be a suction side shell or a pressure side shell of the blade.

The shear web is a component connecting the pressure side and the suction side of the blade shell within the inner cavity of the blade. The shear web transfers shear stress between the pressure and suction sides of the shell. The shear web ensures the integrity of the blade structure.

One single shear web may be arranged for the entire length of the blade. In this case, the shear web may have a length of (almost) the same size as the blade length. Having for example a blade length of 100 meter or more, also the shear web may have a length of (almost) 100 meter or more.

In other examples, the blade may comprise more than one shear web portion. In this case, the method may be applied to position one or more of the shear web portions on the blade shell portion.

The actual position of the shear web is, in particular, the actual position of the shear web relative to the blade shell portion.

The nominal position is, in particular, the nominal position of the shear web. The nominal position of the shear web is, for example, based on a CAD model (Computer Aided Design model) of the blade.

The AI-device is an artificial intelligence (AI) computing device. The AI-device includes, in particular, a machine learning algorithm. The machine learning algorithm is trained based on training data. By applying the trained AI-device to compare the positional data of the actual position of the shear web with reference positional data of the nominal position of the shear web and providing a feedback information on this comparison, the shear web can be positioned faster, more reliably and with higher accuracy.

The machine learning algorithm of the AI-device includes, for example, an artificial neural network (short: neural network), a convolutional neural network, a feedforward neural network, a multilayer neural network, a multilayer perceptron, and/or a deep learning or reinforcement learning based neural network.

A neural network has, for example, at least one input layer, one processing layer and one output layer. Each of the layers includes multiple neurons. The neural network may also have more than one processing layer. The neural network may, for example, comprise several hidden layers.

In a feedforward neural network, information is transferred between neurons in one direction only, i.e., in a forward direction only. A multi-layer perceptron has one or more processing layers. A deep learning neural network has more than one hidden processing layer.

The feedback information determined by the AI-device includes, for example, an information if the actual position of the shear web matches the nominal position.

The sensor system includes one or more sensors. The sensor system includes, for example, a plurality of optical cameras and/or lidar sensors. The one or more sensors are arranged surrounding the blade during manufacturing. The sensor system is configured to obtain sensor data for obtaining the positional data of the actual position of the shear web. The sensor data may be processed by one or more control units and/or one or more processing units. For example, the sensor data may be pre-processed by one or more processing units of the sensor system. Further, the sensor data may be further processed by the AI-device.

According to an embodiment, the AI-device determines in step c) a deviation of the actual position of the shear web from the nominal position.

The deviation includes, for example, a lateral deviation and/or an angle deviation. The deviation includes, for example, a deviation in a direction parallel to a direction from the trailing edge to the leading edge of the blade. The deviation includes, for example, a deviation with respect to an angle between a main plane of the shear web and the direction from the trailing edge to the leading edge of the blade.

The AI-device determines, for example, a deviation of the actual position of the shear web from the nominal position for multiple length positions of the shear web (i.e., for multiple distances from a root portion of the blade).

According to a further embodiment, the AI-device determines as feedback information instructions for repositioning the shear web if a deviation of the actual position of the shear web from the nominal position was determined.

By determining instructions for repositioning the shear web, the position of the shear web can be easier adjusted.

The instructions determined by the AI-device includes, for example, instructions for multiple length positions of the shear web. The multiple length positions span, for example, the entire length of the shear web. For example, the multiple length positions are evenly spaced with respect to the shear web. For example, the multiple length positions are spaced at intervals of 1 meter or smaller, 30 centimeters or smaller, 15 centimeters or smaller, 10 centimeters or smaller and/or 5 centimeters or smaller.

According to a further embodiment, the AI-device is trained based on supervised learning, a reference positional data set of a nominal position of a shear web on a blade shell portion, and training data. Furthermore, the training data include as input data sets M positional data sets of a shear web arranged on a blade shell portion for M different positions of the shear web on the blade shell portion. Further, the training data include as desired output information for each input data set a feedback information based on a comparison of a respective positional data set of the M positional data sets with the reference positional data set.

In supervised learning, a desired output value or set of values ("teaching vector") is specified in the training data. For example, weights of a neural network are optimized based on the desired output value. Herein, the desired output value set is the feedback information based on the comparison of a respective positional data set with the reference positional data set.

M is an integer greater than 1.

According to a further embodiment, the training data include as desired output information for each input data set instructions for repositioning the shear web to remove a deviation of a respective positional data set from the reference positional data set.

Thus, repositioning of the shear web even for a very long shear web can be performed easier and with higher accuracy. For example, receiving the instructions for repositioning a worker or a robot can reposition the shear web.

According to a further embodiment, the positional data of the actual position of the shear web are obtained based on capturing reference features on the shear web, the blade shell portion and/or on a mold in which the blade shell portion is arranged.

The reference features include, for example, reference lines. The reference features include, for example, markers projected onto the mold, the shell portion and/or the shear web. The reference features include, for example, laser lines. The reference features include, for example, markers painted or imprinted on the mold, the shell portion and/or the shear web. The reference features include, for example, characterizing features of the mold, the shell portion and/or the shear web. The characterizing features are, for example, edges, shapes and/or contours of the respective element. The characterizing features are, for example, determined based on image processing. The reference features include, for example, features of a mold (e.g., lower mold portion) on which the shell portion is arranged. The features of the mold may include mold edges or imprinted or projected markers on the mold. The reference features include, for example, features of the shell portion on which the shear is arranged. The features of the shell portion include, for example, a leading edge or a trailing edge.

According to a further embodiment, the sensor system comprises several camera devices, and the positional data of the actual position of the shear web are obtained by obtaining image data of at least a portion of the shear web and the blade shell portion with the camera devices and processing the image data.

The camera devices may include a stereo camera set-up. The camera devices may also include one or more RGB-D cameras (depth cameras) to provide color images (RGB) with depth information.

Image processing may include image stitching, i.e., reconstruction of a large image from several individual images. Image stitching may include calculating a common aspect ratio of the individual images and/or transforming the individual images to the same resolution.

Further, image processing may also include data labeling. Data labeling (data annotation) may include identification of the raw image data and adding one or more labels to the data to specify the context for the AI-device. Data labeling may include creation of a labeled train of images and testing the data set along with reference data extracted from CAD models of the shear web.

According to a further embodiment, the method comprises the step of repositioning the shear web based on the feedback information from the AI-device.

The shear web is, for example, repositioned manually based on the feedback information of the AI-device. The shear web may also be repositioned automatically, e.g., by a robotic unit, based on the feedback information.

According to a further embodiment, steps b) to d) and the step of repositioning the shear web are repeated until the feedback information determined by the AI-device includes the information that the actual position of the shear web matches the nominal position.

The actual position of the shear web matching the nominal position of the shear web includes matching within predefined tolerances.

According to a further embodiment, the method comprises the step of locking the position of the shear web when the feedback information determined by the AI-device includes the information that the actual position of the shear web matches the nominal position.

Thus, the position of the shear can be kept fixed during subsequent processing steps. For example, the position of the shear web can be kept fixed during arranging one or more mandrel portions.

The position of the shear web is, for example, locked by means of retainers, towing ropes and/or rods.

According to a further embodiment, the method comprises the step of arranging a first and a second mandrel portion adjacent to the shear web such that the shear web is sandwiched between the first and second mandrel portions, wherein steps b) to d) are repeated after arranging the first and/or the second mandrel portions.

Repeating steps b) to d) after arranging the first and/or the second mandrel portions allows a quality check of the position of the shear web after positioning the first and/or the second mandrel portions. In particular, the shear web may have been moved out of its correct position due to arranging the first and/or the second mandrel portions. Thus, a further quality check of the shear web position and repositioning of the shear web may be necessary.

The mandrel portions are, in particular, mold core portions. The mandrel portions are, for example, configured to be arranged in an inner cavity formed by the lower and upper mold portions. The mandrel portions are, for example, each covered by a vacuum bag for a vacuum-induced resin infusion process.

According to a further embodiment, the method comprises the step of outputting the feedback information by a human machine interface and/or visualizing the feedback information on a display of an electronic device, in particular a display of a mobile electronic device, a tablet, a laptop, a mobile phone, an augmented reality device and/or augmented reality glasses.

By outputting the feedback information, a worker receives feedback on the actual position of the shear web. Further, the worker receives, for example, a feedback information on the necessity to reposition the shear web. Further, the worker receives, for example, a detailed feedback information on how to reposition the shear web to approach the desired position of the shear web with respect to the blade shell portion.

According to a further embodiment, the blade shell portion comprises a fiber lay-up, and the method comprises the step of infusing at least a connection region of the fibre lay-up and the shear web with a resin and curing the resin to join the shear web with the fiber lay-up.

Thus, the shear web can be joined with the blade shell portion by means of a fiber-reinforced resin laminate joint.

The fiber lay-up is, in particular, a dry or semi-dry fiber lay-up.

According to a further aspect, a computer program product is provided. The computer program product comprises a program code for executing the above-described method for manufacturing a wind turbine blade when run on at least one computer.

In particular, the computer program product comprises a program code for executing at least steps b) to d) of the method when run on at least one computer.

The program code of the computer program product may be run on a distributed computer system comprising several computers.

A computer program product, such as a computer program means, may be embodied as a memory card, USB stick, CD-ROM, DVD or as a file which may be downloaded from a server in a network. For example, such a file may be provided by transferring the file comprising the computer program product from a wireless communication network.

According to a further aspect, a manufacturing system for manufacturing a wind turbine blade is provided. The manufacturing system comprises:
a shear web arranged on a blade shell portion,
a sensor system for obtaining positional data of an actual position of the shear web, and
an AI-device trained based on machine learning, the AI-device being configured for comparing the positional data of the actual position of the shear web with reference positional data of a nominal position and determining a feedback information based on the comparison.

The above or below described devices and units, e.g., the AI-device, the one or more control units, the one or more processing units may be implemented - at least partially - in hardware and/or in software. If said device is implemented in hardware, it may be embodied as a computer or as a processor or as a part of a system, e.g., a computer system. If said device is implemented in software it may be embodied as a computer program product, as a function, as a routine, as a program code or as an executable object.

The embodiments and features described with reference to the method of the present invention apply mutatis mutandis to the computer program product and the manufacturing system of the present invention.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
Fig. 1 shows a wind turbine according to an embodiment;
Fig. 2 shows a cross-section of a blade of the wind turbine of Fig. 1;
Fig. 3 shows a lower mold portion for manufacturing the blade of Fig. 2, wherein a shell portion and a shear web of the blade are arranged on the lower mold portion;
Fig. 4 shows a manufacturing system for manufacturing the blade of Fig. 2;
Fig. 5 shows an example of a human machine interface of the manufacturing system of Fig. 4;
Fig. 6 shows a cross-section view of Fig. 3, wherein in addition to the shell portion and the shear web also mandrel portions are arranged on the lower mold portion; and
Fig. 7 shows a flowchart illustrating a method for manufacturing a blade of the wind turbine of Fig. 1 according to an embodiment.

In the Figures, like reference numerals designate like or functionally equivalent elements, unless otherwise indicated.

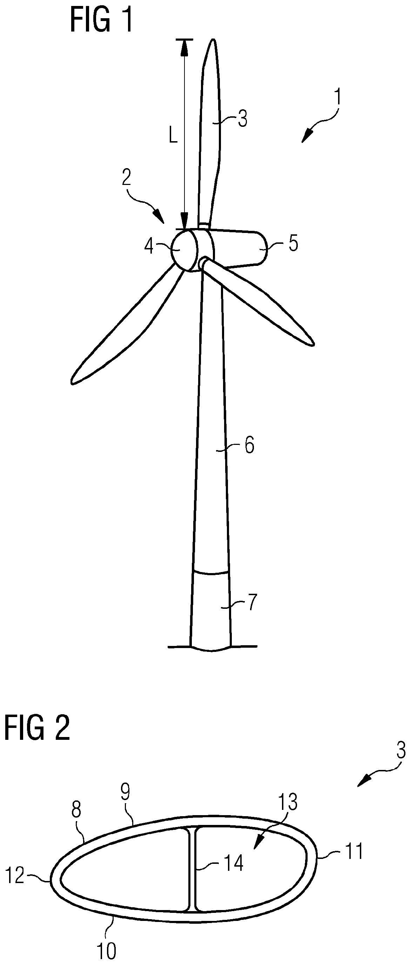

Fig. 1 shows a wind turbine 1 according to an embodiment. The wind turbine 1 comprises a rotor 2 having one or more blades 3 connected to a hub 4. The hub 4 is connected to a generator (not shown) arranged inside a nacelle 5. During operation of the wind turbine 1, the blades 3 are driven by wind to rotate and the wind's kinetic energy is converted into electrical energy by the generator in the nacelle 5. The nacelle 5 is arranged at the upper end of a tower 6 of the wind turbine 1. The tower 6 is erected on a foundation 7 such as a concrete foundation or a monopile driven into the ground or seabed.

Fig. 2 shows a cross-section view of one of the blades 3 of the wind turbine 1 of Fig. 1.

The blade 3 comprises a blade shell 8. The blade shell 8 comprises an upper blade shell 9 forming a suction side of an airfoil of the blade 3. The blade shell 8 comprises a lower blade shell 10 forming a pressure side of the airfoil. The reference sign 11 denotes a leading edge of the blade 3. The reference sign 12 denotes a trailing edge of the blade 3. The blade shell 8 forms an inner cavity 13 of the blade 3.

The blade 3 comprises a shear web 14 connecting the pressure side shell 8 and the suction side shell 10 within the inner cavity 13 of the blade 3. The shear web 14 is configured to transfer shear stress between the pressure and suction sides 9, 10 of the shell 8.

For very long blade length L (Fig. 1) of, for example, 100 meter or more, positioning of the shear web 14 is a difficult and complex task.

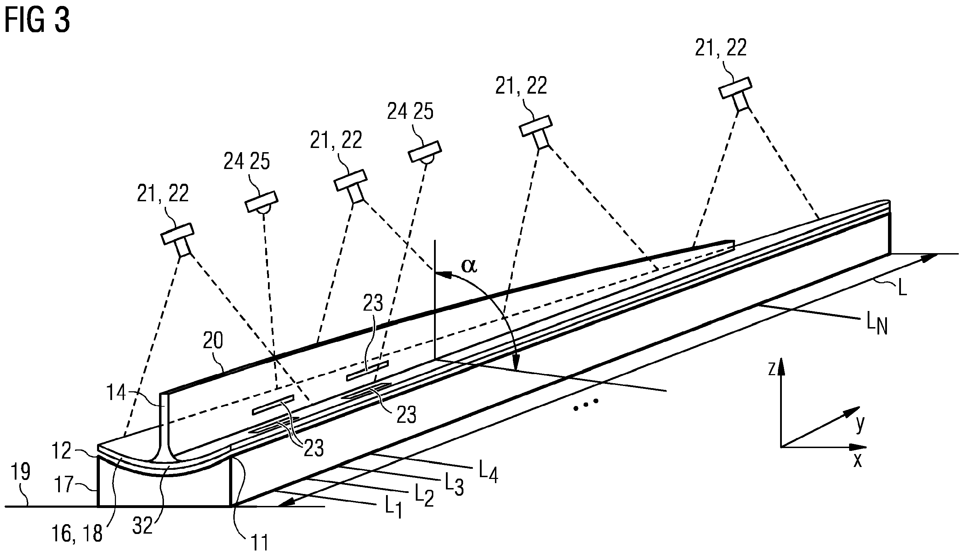

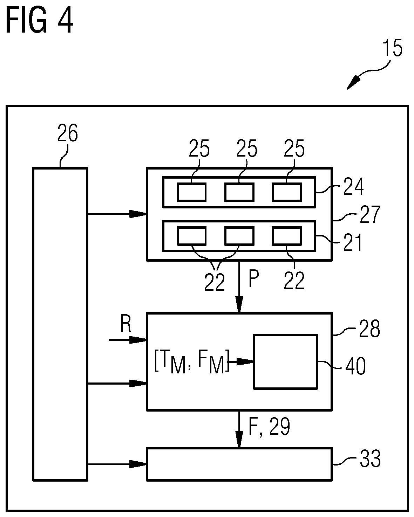

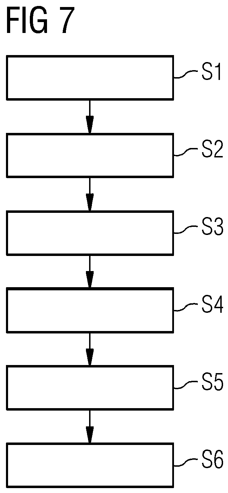

In the following, a method for manufacturing a wind turbine blade 3 of the wind turbine 1 of Fig. 1 is described with respect to Figs. 3 to 7. The method is, particularly, applied for positioning the shear web 14 of the wind turbine blade 3. The method is carried out by means of a manufacturing system 15 (Fig. 4).

In a first step S1 of the method, the shear web 14 is arranged on a blade shell portion 16. This is illustrated in Fig. 3.
As shown in Fig. 3, a lower mold portion 17 is provided. On the lower mold portion 17, a fiber lay-up 18 of the shell portion 16 is arranged. The fiber lay-up 18 comprises for example, dry fiber plies. Further, on top of the shell portion 16 comprising the fiber lay-up 18, the shear web 14 is arranged. The shear web 14 is, for example, arranged by means of a lifting device (not shown) such as a crane and/or liftable yoke.

A floor 19 of a manufacturing site (e.g., manufacturing hall) defines, for example, a horizontal plane (XY plane in fig. 3). The shear web 14 is, for example, arranged such that its main plane 20 (YZ plane in Fig. 3) is arranged parallel to a height direction Z. The height direction Z is perpendicular to the horizontal plane (XY plane) defined by the floor 19.

In a second step S2 of the method, positional data P (Fig. 4) of an actual position of the shear web 14 are obtained by means of a sensor system 21. The sensor system 21 comprises, for example, multiple camera devices 22 for providing image data of at least a portion of the shear web 14, the shell portion 16 and the mold 17 (Fig. 3).

The positional data P of the actual position of the shear web 14 are, for example, obtained based on capturing reference features 23 (Fig. 3) on the shear web 14 and/or on the blade shell portion 16. The reference features 23 include, for example, markers projected onto the shear web 14 and/or onto the shell portion 16. A projector system 24 of the manufacturing system 15 (Fig. 4) includes, for example, several projector devices 25. For example, the projector system 24 includes several laser devices 25 for projecting laser lines 23 onto the shear web 14 and/or the shell portion 16.

The manufacturing system 15 (Fig. 4) further comprises a control unit 26. The control unit 26 controls a measurement system 27 comprising the sensor system 21 and the projector system 24.

In a third step S3 of the method, the positional data P of the actual position of the shear web 14 are compared with predefined reference positional data R of a nominal position of the shear web 14 by applying an AI-device 28 (Fig. 4).

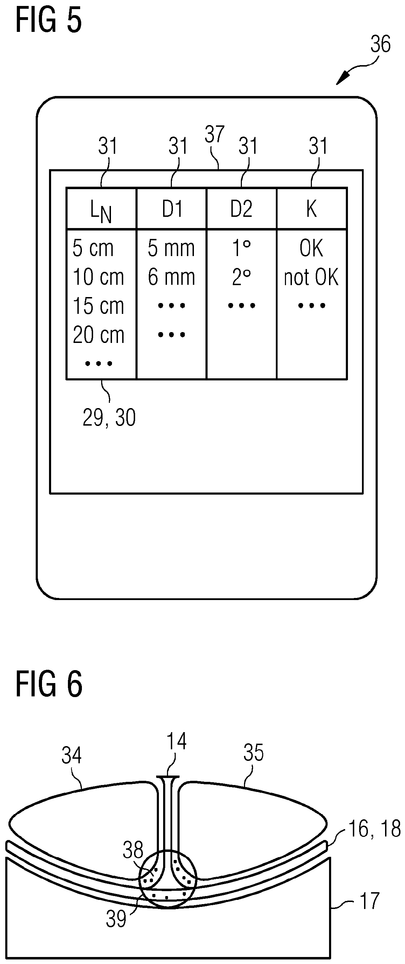

The AI-device 28 is trained based on machine learning. The AI-device 28 includes, for example, a neural network 40. The AI-device 28, e.g., the neural network 40, is for example trained based on deep supervised learning and training data. The training data include as input data sets, for example, M positional data sets T_{M} of a shear web 14 arranged on a blade shell portion 16 for M different positions of the shear web 14 on the blade shell portion 16. The training data include, for example, as desired output information for each input data set a feedback information F_{M} based on a comparison of a respective positional data set T_{M} of the M positional data sets with the reference positional data set R. In particular, the training data may include as desired output information for each input data set T_{M} instructions 29 (Fig. 5) for repositioning the shear web 14. The AI-device 28 is, for example, trained before providing the lower mold 17 (Fig. 3), before arranging the shell portion 16 and/or before initially arranging the shear web 14 on the shell portion 16.

The trained AI-device 28 is, for example, applied to analyze the image data recorded by the camera devices 22 in Fig. 3. Therein, the reference features 23 are recognized in the image data and, for example, associated with 3D-coordinates. For example, actual coordinates P of the reference features 23 of the shear web 14 are compared by the AI-device 28 with reference coordinates R of a nominal position of reference lines. The reference coordinates are reference positional data R based on a predefined nominal (i.e., target) position of the shear web 14 with respect to the shell portion 16. The reference coordinates R are, for example, based on a CAD model of the blade 3.

In a fourth step S4 of the method, the AI-device 28 determines a feedback information F, 29 based on the comparison of step S3.

The feedback information F, 29 includes, for example, a classification information K if the actual position of the shear web 14 matches the nominal position within predefined tolerances or not.

The feedback information F, 29 may also include instructions for repositioning the shear web 14 if a deviation of the actual position of the shear web 14 from the nominal position was determined.

The instructions F, 29 determined by the AI-device 28 may include instructions for multiple length positions L_{N} of the shear web 14. Exemplarily, four length positions L₁ - L₄ of N length positions L_{N} are illustrated in Fig. 3 and denoted with a reference sign. It is noted that there may be many more length positions L_{N} than shown in the figure.

In Fig. 5, an example of a feedback information 29 determined by the AI-device 28 is shown. In this example, the feedback information 29 includes a table 30 with four columns 31. The first column 31 lists the length position L_{N}. The second column 31 lists a deviation D1 of the actual position of the shear web 14 from a nominal position with respect to a direction pointing from the trailing edge 12 to the leading edge 11 (X-direction in Fig. 3). The third column 31 lists a deviation D2 of the actual position of the shear web 14 from a nominal position with respect to an angle α between the main plane 20 of the shear web 14 and a horizontal plane (XY plane in Fig. 3). The fourth column 31 of the table 30 of the feedback information 29 lists a classification result K.

For example, at a length position L₁ of 5 cm from a root portion 32 (Fig. 3) of the blade 3, a deviation D1 in the positive X-direction is 5 mm and a deviation D2 of the angle α is 1°. The classification result K for this length position L₁ is "OK". In other words, at this length position L₁, the actual position of the shear web 14 matches the nominal position within predefined tolerances. Further, at a length position L₂ of 10 cm, a deviation D1 is, for example, 6 mm and an angle deviation D2 is 2°. The classification result K for this length position L₂ is "not OK". In other words, at this length position L₂, the actual position of the shear web 14 does not match the nominal position within predefined tolerances.

In a fifth step S5 of the method, the shear web 14 is repositioned based on the feedback information F, 29 from the AI-device 28.

The shear web 14 is, for example, manually repositioned based on the feedback information F, 29 of the AI-device 28.

The manufacturing system 15 (Fig. 4) comprises, for example, a human machine interface 33 (HMI) for outputting the feedback information F, 29. The HMI 33 includes, for example, a display 37 for displaying the table 30 (Fig. 4). The display 37 is, for example, a display of a mobile device 36 such as a mobile phone, a tablet or the like. A worker looking at the table 30 shown on the display 37 of the mobile device 36 can easily adjust the position of the shear web 14, even in the case of a very long blade 3.

In other examples, the shear web 14 may also be repositioned automatically, e.g., by a robotic unit (not shown), based on the feedback information F.

Steps S2 to S5 are repeated until the feedback information F, 29 determined by the AI-device 28 includes the information that the actual position of the shear web 14 matches the nominal position for all length positions L_{N}. In other words, steps S2 to S5 are repeated until the classification information K is "OK" for all length positions L_{N}.

In a sixth step S6 of the method, a first mandrel portion 34 and a second mandrel portion 35 are arranged adjacent to the shear web 14 such that the shear web 14 is sandwiched between the first and second mandrel portions 34, 35 (Fig. 6).

As the shear web 14 may have been moved out of its correct position due to arranging the first and second mandrel portions 34, 35, a further quality check of the shear web position and repositioning of the shear web 14 may be necessary. Therefore, steps S2 to S5 may be repeated after arranging the first and second mandrel portions 34, 35.

After ensuring by means of the AI-device 28 that the shear web 14 is at its correct position for the entire length L of the blade 3, the shear web 14 may be joined with the blade shell portion 16, for example by infusing the fiber lay-up 18 of the shell portion 16 with resin 38 (Fig. 6). For example, resin 38 is infused at least in a connection region 39 of the fibre lay-up 18 and the shear web 14. By curing the resin 38, the shear web 14 and the fiber lay-up 18 are joined by a laminate joint.

Thus, with the proposed method using artificial intelligence (AI-device 28) on images captured using plurality of camera devices 21 placed strategically around the blade mold 17 which covers the field of view of the shear web 14 and the mandrel portions 34, 35, and with computer visualization (display 37), it is possible to provide guidance to workers and acquire accurate information of the shear web 14 position. With the feedback information F, 29 repositioning of the shear web 14 in case of a misalignment is easily possible. In particular, workers may be provided with feedback in real time.

The method may be also applied in an analogue manner for other applications such as wind turbine blade deflection tests, wind turbine blade twist test, positioning of a wind turbine blade for root drilling, positioning of a precast beam and/or any other precast components on a shell portion and/or a fiber lay-up, positioning of lightning protection cables in a wind turbine blade and other wind turbine blade testing and handling processes.

Although the present invention has been described in accordance with preferred embodiments, it is obvious for the person skilled in the art that modifications are possible in all embodiments.

## Claims

1. A method for manufacturing a wind turbine blade (3), comprising the steps:
a) arranging (S1) a shear web (14) on a blade shell portion (16),
b) obtaining (S2) positional data (P) of an actual position of the shear web (14) by means of a sensor system (21),
c) comparing (S3) the positional data (P) of the actual position of the shear web (14) with reference positional data (R) of a nominal position by applying an AI-device (28) trained based on machine learning, and
d) determining (S4), by the AI-device (28), a feedback information (F, 29) based on the comparison.

2. The method according to claim 1, wherein the AI-device (28) determines in step c) a deviation of the actual position of the shear web (14) from the nominal position.

3. The method according to claim 1 or 2, wherein the AI-device (28) determines as feedback information (F, 29) instructions for repositioning the shear web (14) if a deviation of the actual position of the shear web (14) from the nominal position was determined.

4. The method according to one of claims 1 - 3, wherein:
the AI-device (28) is trained based on supervised learning, a reference positional data set (R) of a nominal position of a shear web (14) on a blade shell portion (16), and training data,
the training data include as input data sets M positional data sets (T_{M}) of a shear web (14) arranged on a blade shell portion (16) for M different positions of the shear web (14) on the blade shell portion (16), and
the training data include as desired output information for each input data set a feedback information (F_{M}) based on a comparison of a respective positional data set (T_{M}) of the M positional data sets with the reference positional data set (R) .

5. The method according to claim 4, wherein the training data include as desired output information for each input data set (T_{M}) instructions (29) for repositioning the shear web (14) to remove a deviation of a respective positional data set (T_{M}) from the reference positional data set (R).

6. The method according to one of claims 1 - 5, wherein the positional data (P) of the actual position of the shear web (14) are obtained based on capturing reference features (23) on the shear web (14), the blade shell portion (16) and/or on a mold (17) in which the blade shell portion (16) is arranged.

7. The method according to one of claims 1 - 6, wherein the sensor system (21) comprises several camera devices (22), and the positional data (P) of the actual position of the shear web (14) are obtained by obtaining image data of at least a portion of the shear web (14) and the blade shell portion (16) with the camera devices (22) and processing the image data.

8. The method according to one of claims 1 - 7, comprising the step of repositioning (S5) the shear web (14) based on the feedback information (F, 29) from the AI-device (28).

9. The method according to claim 8, wherein steps b) to d) and the step of repositioning (S5) the shear web (14) are repeated until the feedback information (F, 29) determined by the AI-device (28) includes the information (K) that the actual position of the shear web (14) matches the nominal position.

10. The method according to one of claims 1 - 9, comprising the step of locking the position of the shear web (14) when the feedback information (F, 29) determined by the AI-device (28) includes the information (K) that the actual position of the shear web (14) matches the nominal position.

11. The method according to one of claims 1 - 10, comprising the step of arranging (S6) a first and a second mandrel portion (34, 35) adjacent to the shear web (14) such that the shear web (14) is sandwiched between the first and second mandrel portions (34, 35), wherein steps b) to d) are repeated after arranging the first and/or the second mandrel portions (34, 35).

12. The method according to one of claims 1 - 11, comprising the step of outputting the feedback information (F, 29) by a human machine interface (33) and/or visualizing the feedback information (F, 29) on a display (37) of an electronic device (36), in particular a display (37) of a mobile electronic device (36), a tablet, a laptop, a mobile phone (36), an augmented reality device and/or augmented reality glasses.

13. The method according to one of claims 1 - 12, wherein the blade shell portion (16) comprises a fiber lay-up (18), and the method comprises the step of infusing at least a connection region (39) of the fibre lay-up (18) and the shear web (14) with a resin (38) and curing the resin (38) to join the shear web (14) with the fiber lay-up (18).

14. A computer program product comprising a program code for executing the method of one of claims 1 - 13 when run on at least one computer.

15. A manufacturing system for manufacturing a wind turbine blade (3), comprising:
a shear web (14) arranged on a blade shell portion (16),
a sensor system (21) for obtaining positional data (P) of an actual position of the shear web (14), and
an AI-device (28) trained based on machine learning, the AI-device (28) being configured for comparing the positional data (P) of the actual position of the shear web (14) with reference positional data (R) of a nominal position and determining a feedback information (29) based on the comparison.
